# EUROPEAN PATENT SPECIFICATION

(11) **EP 0 727 668 B1**
(45) Date of publication and mention of the grant of the patent: **21.04.2004**
(21) Application number: 96102131.8
(22) Date of filing: 14.02.1996
(51) Int. Cl.: G01R 11/00, H02J 13/00, H02J 3/14

(54) **Method for the energy management in a domestic ambient**
Verfahren zur Energieverwaltung in einer Haushaltsumgebung
Méthode pour la gestion de l'énergie dans un environnement domestique

(30) Priority: 20.02.1995 IT TO950119
(43) Date of publication of application: 21.08.1996
(60) Divisional application: 03025189.6
(73) Proprietor: WRAP S.p.A., 60044 Fabriano (AN) (IT)
(72) Inventor: Aisa, Valerio, I-60044 Fabriano (IT)
(74) Representative: Dini, Roberto, Dr. Ing.

(56) References cited:
- EP-A- 0 250 320
- EP-A- 0 319 235
- EP-A- 0 433 965
- FR-A- 2 404 326
- FR-A- 2 672 400
- IEEE TRANSACTIONS ON CONSUMER ELECTRONICS, MAY 1991, USA, vol. 37, no. 2, ISSN 0098-3063, pages xxix-xxxv, XP002003950 STAUFFER H B: "Smart enabling system for home automation"

## Description

The present invention refers to a method for the management of the electric energy consumption in a domestic environment.

It is known that the theme of the home automation, i.e. of the integrated management of different electric devices being present in a home, is always increasing in interest.

The known home automation systems involve the presence of a central supervisor unit that usually provides to manage the different household appliances, by controlling some "intelligent" sockets, that therefore control the supply of the energy to the different household appliances by means of ON/OFF type operations.

These known centralized supervision systems present some drawbacks.

A first type of drawback is due to the complexity of the control units, which, having to manage a plurality of different domestic apparatuses in different times and ways, must be of the programmable type; this necessarily implies that the user is forced to a complicated programming activity.

A second type of drawback is due to the poor efficiency of the control and supervision system, which, as said before, manages the electric supply of different domestic apparatuses solely with ON/OFF type operations driven through the so called "intelligent" supply sockets; such control mode is clearly very elementary and approximate.

A third type of drawback is caused by the cost of the central supervision units which, because of its programmability, needs a suitable user interface, composed typically by a keyboard and a display, and an electronic control system with suitable elaboration and memory capability (for example a personal computer).

European Patent EP 319 235 discloses a system for providing different services within a house. Such a system is based on the integration of a plurality of networks having different structure and aims, in particular network for digital control, network for power distribution, network for analogical signal distribution and network for video signal distribution.

The appliances are enabled to reciprocal data exchange through a suitable system, i.e. a LAN.

The system comprises devices, called power blocks, that are associated to the appliances and equipped with bidirectional communication port, one among them being able to monitor the value measured by a wattmeter and to deliver reports on the used power.

However the power blocks operate under the control of supervisor devices and they deliver the information to such supervisor devices. Thus this solution does not overcome the mentioned drawback about cost of the supervisor unit and complexity of programming.

The main aim of the present invention is that of resolving the cited drawbacks of the known systems for managing house electric loads (represented, i.e., by household appliances such as washing or cooking machines), based on the use of supervision and control units of the centralized type.

Within such aim, the present invention intends to provide for an optimized management method, that avoids to overcome the limits of the installed maximum power being established by the contract with the electric energy supplier, and also allows to favour the use of different household appliances during time periods of reduced energy cost; the present invention intends similarly to show a method in which the optimized management of the energy can be obtained in a fully automatic way, without any action by the user.

These and other aims, that will appear clearer in the following, are reached according to the invention, by a method for the management of the electric energy consumption in a domestic environment incorporating the characteristics of the annexed claim

The characteristics and advantages of the present invention will become clear from the following description and the annexed drawings, which are supplied as a pure explicative and non limiting example, wherein:
- Fig. 1 schematically represents a domestic electric system, equipped with some domestic loads realized according to the present invention;
- Fig. 2 represents, through a flow chart, the control system's general mode for managing the electrical energy consumption according to the invention;
- Fig. 3a represents in schematic form a possible embodiment of an apparatus for the measure of the instantaneous electric energy consumption in a home, of the type suitable for the aims of the present invention;
- Fig. 3b represents a possible embodiment of an energy meter which is able to provide, besides the value of the current energy consumption, further useful information for the aims of the present invention;
- Fig. 4 illustrates in schematic form the concept of "synergy" among different domestic loads, that is a direct consequence of the system according to the present invention.

According to the present invention, the overcoming of limitations of the known management systems is obtained through the use of electric appliances able to dynamically self-adjust their own energy consumption, changing it continually with respect to the global energetic exigencies (variable during the day) of the domestic environment wherein they are to operate.

In other words, according to the invention, these household appliances are equipped with control systems presenting the following main features:
1. ability to receive through a suitable transmitting medium and a suitable electronic interface, within regular intervals, a piece of information about the instantaneous electrical energy consumption of the domestic environment into which the appliances themselves operate. This piece of information is supplied by a suitable, external measuring apparatus;
2. ability to evaluate said piece of information with respect to the available maximum power limits established by the contract with the energy supplier;
3. ability to manage the electrical energy consumption with respect to the peculiar functions of the household appliance and, where possible, to the functions of the other electrical apparatuses in the home environment.

From the first cited feature, the need is evidenced of having a suitable instrument for the measure of the electric power being absorbed by the domestic environment. It is also evidenced the need of having an adequate communication system between the aforementioned measuring apparatus and the **domestic loads**, that are, according to the invention, equipped with a dynamic self adjustment system of the energy consumption.

From the second cited features the need is evidenced of equipping the household appliance with a control system, being easily programmable with respect to the maximum power limits established by the contract between the user and the supplier of the electric energy .

From the third feature, finally, the necessity emerges of defining priority rules among the different domestic loads, in order to ensure a dynamical distribution of the energy, which is optimized in function of the type of the household appliances that are active from time to time, and in function of the importance of their role for the user.

In the following of the present description there will be shown firstly the general method for optimizing and rationalizing the consumption of the electric energy in a domestic environment and, secondly, some possible embodiments for satisfying the needs evidenced by the above mentioned three features.

In particular, the optimized management of the electric energy of the domestic environment is obtained, according to the invention, by means of the following two actions:
- hindering the overcoming of the current absorption limits fixed by the supply contract (contractual power), i.e. to avoid the black-out due to the action of the power limiter;
- promoting in a simple way the use of different household electric appliances during time periods in which the electric energy has a reduced cost.

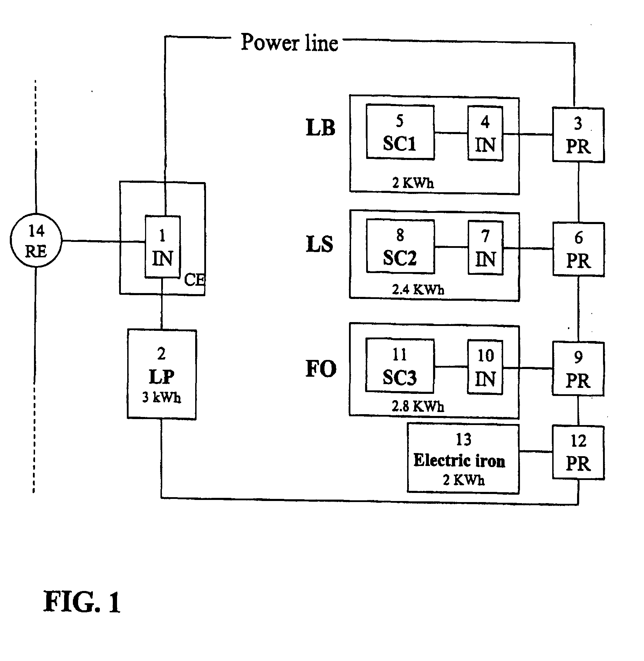

In the Fig. 1 a domestic electric system is represented in a schematic way, wherein part of the loads (household appliances LB, LS and FO), according to the present invention, are able to self-adjust their own energy consumption. The electric energy is taken from an external power mains RE (block 14), through an energy meter CE.

The power supplied through the meter CE is, as it normally happens, limited by means of a power limiter LP (block 2) that limits the installed power, in agreement with the supply contract that, in the case of the represented example, establishes a maximum power limit of 3 kW (contractual power).

Four electric appliances, being typically present in a domestic environment, are supplied through four sockets indicated with PR (blocks 3, 6, 9 and 12):
a laundry washing machine LB with rated power of 2 kWh, a dishwashing machine LS with rated power of 2.4 kWh, an oven FO with rated power of 2.8 kWh and an electric iron (block 13) with rated power of 2 kWh.

The energy meter CE, the laundry washing machine LB, the dishwashing machine LS and the oven FO are connected to the electric network by means of a suitable electronic interface IN (blocks 1, 4, 7 and 10), which has the aim of allowing a reciprocal exchange of information, according to the present invention; in the case herein described as an example, this is obtained through the known system of the powerline carrier communication, according to which said exchange of information is carried out through the same electric network, using a suitable bi-directional modem of the half-duplex type, that is a device able to exchange the information in the two directions, but in different times.

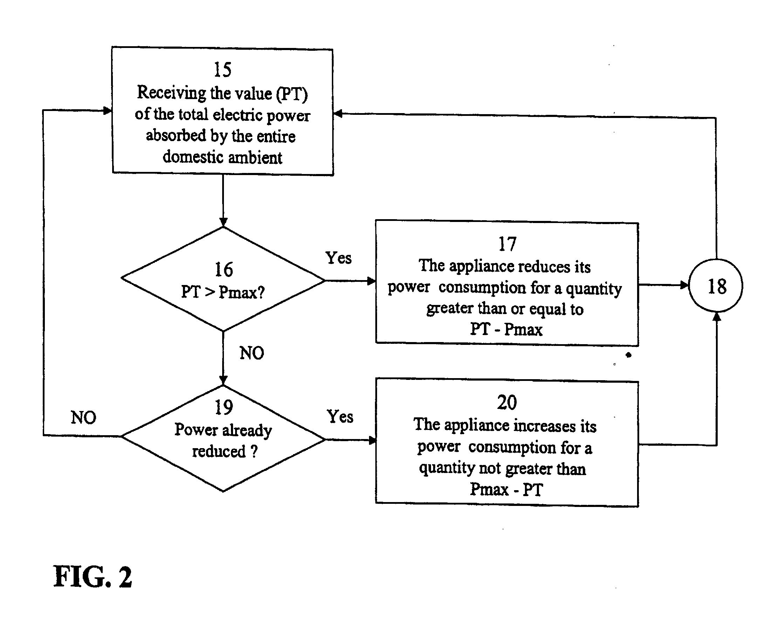

The three household appliances LB, LS and FO, represented in Fig. 1, are furthermore equipped with a suitable control system, indicated respectively with SC1 (block 5), SC2 (block 8) and SC3 (block 11). Such control system, that in the following will be generically indicated with SC, is of fundamental importance for the aims of the present invention, since it allows the rationalization the electric energy consumption according to the mode shown in the flow chart shown in Fig. 2, that describes the general method through which, according to the invention, the energy consumption of an household appliance is self-adjusted.

It has to be specified that the way of exchanging the information among the electric household appliances LB, LS and FO (i.e. the so-called communication protocols), does not represent the finality of the present invention, which only supposes the existence, in the domestic environment, of a suitable communication means or "bus", that is a suitable transmission line (in the case described herein, the power mains) onto which the flow of information is managed by means of suitable rules (protocols), being in conformity with the specific international standards in the matter of safety, electromagnetic compatibility and information exchange.

For example, a "domestic bus" that satisfies all the requirements of the aforementioned international standards is that known as EHS (European Home System), nowadays known as KONNEX, recently developed in the purview of the program Esprit of the European Community. Another "bus" that satisfies the aforementioned international standard and which can be conveniently utilized in the present invention, is that proposed by the US Company Echelon, known with the name of LON (Local Operating Network), nowadays known as LONTALK.

In Fig. 2 a flow chart is represented, that describes the way in which the control system SC of any single household appliance, being realized according to the present invention, is able to self-adjust its own electric energy consumption, in the respect of limits of the available power established by the supply contract.

In such Fig. 2, block 15 represents the communication element, according to invention, between the control system SC of any of the three electric appliances LB, LS and FO of Fig. 1 and a device that measures constantly the total electric power being absorbed (for exemplificative and non limiting purposes, in Fig. 1 such a device coincides with the energy meter CE of the domestic environment, having it suitable characteristics that will be described in the following).

As already said, block 15 implies the existence of a communication "bus", that allows for the dialogue among the energy meter CE and the single electric appliances LB, LS and FO, in accordance with the international standards in the matter of safety, electromagnetic compatibility and information exchange.

Through block 15, the control system SC of each of the three household appliances (LB, LS and FO) receives from the energy meter CE, within regular time intervals (for example once any minute), the current value of the total power PT being absorbed at that instant by different active electric loads of the domestic environment.

Block 16 is a test block, through which the control system SC of each of the three household appliances verify if the current value of the total power being absorbed by different domestic loads is greater than the maximum one (Pmax), which is established by the supply contract (contractual power) and adjusted by means of the power limiter LP (block 2 of Fig. 1). If PT is greater than Pmax, then the control passes to block 17, and the control system SC provides for reducing the energy consumption of the relevant electric appliance of a quantity being greater or equal to the difference PT-Pmax; successively, through block 18, the control returns to block 15, so that the control system SC can update the value of the total power absorbed by different active electric loads of the domestic environment.

If, coming back to block 16, PT it is less than or equal to Pmax, then the control passes to block 19, that it is a test block through which the control system SC verifies the power absorption state of the relevant household appliance.

If the appliance is in normal operating conditions, i.e. if there has not been any previous reduction of the power necessary at that moment for its normal operation, the control will pass again to block 15, for an updating of the total absorbed power.

On the contrary, if the control system SC has been previously obliged to reduce the energy consumption of the relevant electric appliance (block 17), the control will pass to block 20, that will operate again an increase of the energy consumption, but having care that the maximum power quantity being added does cannot exceed the difference Pmax-PT. Successively, the control will return again to block 15, through block 18. Blocks 17 and 20 therefore represent respectively the ability of the control system SC of each household appliance, to reduce or to lead to the normality status the energy consumption required by some particular phase of the operating cycle, during which the household appliance is found to operate. Such ability depends, obviously, upon the degrees of freedom of the control system SC.

In the specific case of the household appliances LB, LS and FO represented in Fig. 1, where the greater part of the absorbed power relates to heating elements, we can think, for example, of fractioning said power between more elements (i.e. at least two resistances), in order to have the maximum energy absorption when all the heating elements are supplied. In that case, for reducing or increasing the absorbed power, it will be sufficient to deactivate or activate the single heating elements, according to the needs.

Thus, greater is the number of the heating elements, higher will be the number of freedom degrees available for the control system SC and more rigorous will be, as a result, the management of the energy.

Block 15 of Fig. 2 expresses, as said before, the interaction between the energy meter CE and the household appliances (LB, LS and FO) equipped with a suitable control system SC, according to invention, that is able to manage such interaction.

Such a block 15 supposes thus that the energy meter CE is able to send, within regular time intervals, through a suitable transmission means (that, as said before, in the specific case of Fig. 1 is the powerline carrier communication-system) and with a standard exchange mode (e.g. protocol EHS or LON), the information relating to the total power absorbed by different loads active in the domestic environment.

The condition that the meter CE is able to talk directly with the household appliances represents, as said, a peculiar case, being purely exemplificative and non limiting of the present description; such condition is sufficient and desirable, being economic and showing good requirements for the standardization of the proposed method, but it is not strictly necessary for the purposes of the present invention.

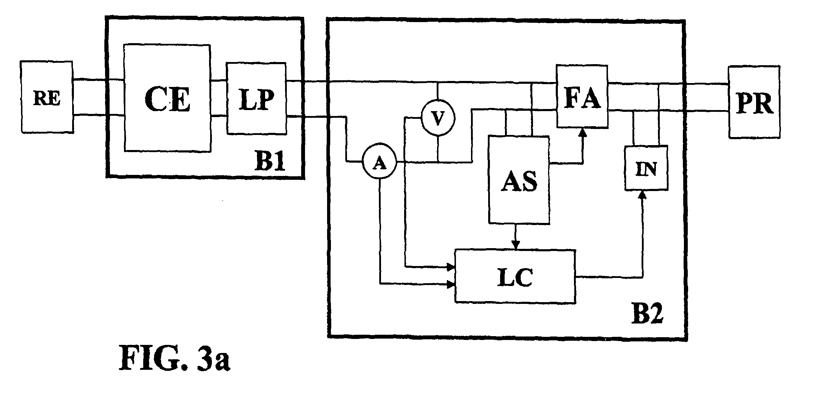

In fact, more in general, we can think to employ any measuring apparatus, even external to the meter CE, being able to measure the total power supplied and to send such information on a suitable "bus", to which the different domestic electric loads, according to invention, are connected (a possible embodiment of such a measuring apparatus is represented in Fig. 3a and described in the following).

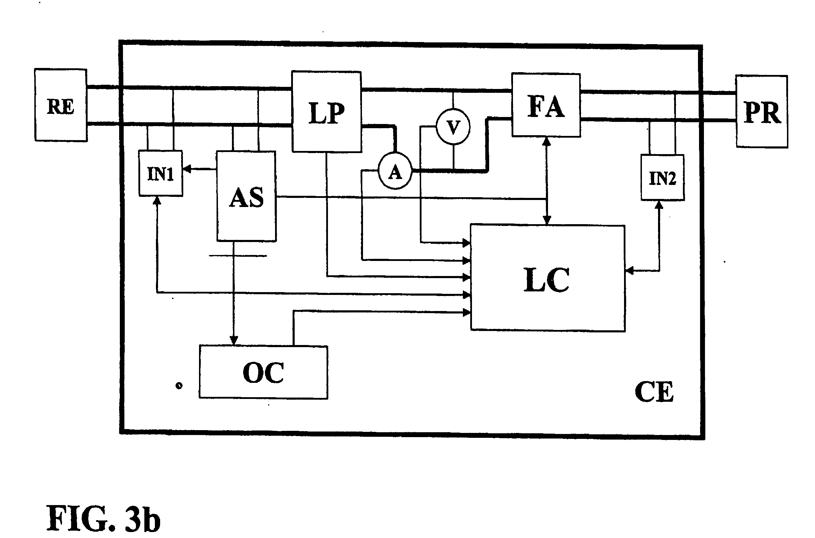

Coming back to Fig. 2, blocks 16, 17 and 20 imply, finally, the knowledge, for the control system SC of each electric appliance, of the value of the contractual power Pmax. Such value may be signalled to the control system SC by using suitable hardware configuration means (eg. configuration jumpers or switches) at the moment of the installation of the electric appliance, or, even better, may be made available on the communication bus by the energy meter CE itself (as will be described referring to Fig. 3b), so allowing to the control system SC of each electric appliance to configure itself.

The logic of the energy consumption management, expressed in the flow chart of Fig. 2 is enhanced with the concept of the priority management between different domestic loads.

In fact, in the case in which the oven FO and the dishwashing machine LS of Fig. 1 are simultaneously active, the latter can decide automatically to let more energy to the oven, the cooking of the food being considered prioritary if compared to the washing of dishes; as a consequence, the washing machine will continue with the heating of the water only during the natural pauses of the heating of the oven.

In other words, it is possible according to the present invention, to keep more household appliances operative, which share all together an electric power that is greater than that provided for the single domestic load, without any black-outs. This result is obtained on the basis of the consideration that the household appliances have different operative phases during which the electric current absorptions are different: therefore, by managing with cleverness the single operative phases and by knowing how much other "not intelligent" household appliances are consuming, it is possible to operate in a "time sharing" mode, letting a plurality of household appliances operative, without that this fact can cause the overcoming of the contractual power.

This supposes that each "intelligent" household appliance declares constantly, onto the communication "bus" for communicating with the other loads, its instant consumption of electric energy and/or an information that allows to such other loads to know that such "intelligent" household appliance is operating; such information delivered on the bus is advantageously represented by the priority level of the household appliance, established on the basis of possibly standardized rules.

In the case in which an electric load is not equipped with a control system SC, according to the present invention (as it happens, for example, for the electric iron - block 13 - of Fig. 1), then it will have automatically assigned the maximum priority, if compared to the other loads, due to the fact that the electric iron does not have the ability to self-adjust its own energy consumption in relation to the global consumption of the domestic environment.

In Fig. 3a the blocks diagram is represented of an apparatus being able to measure the total power supplied in the domestic environment and to send such information on the communication "bus". In such Fig. 3a two blocks can be identified: block B1, being associated to the energy meter CE and to the power limiter LP, and block B2, relating to the apparatus that constantly measures the total power absorbed by an ensemble of active electric loads, and sends within regular time intervals, said measures to the same loads, in particular to the household appliances LB, LS and FO, that are able to take advantage of such an information in order to self-adjust themselves.

Such information is sent, as already exemplified, by means of the powerline carrier communication transmission system, i.e. through the same wires of the domestic electric network.

It appears therefore natural that the functions carried out by the apparatus measuring the total absorbed power should be embodied in the same meter CE, since the main function of the meter is that of carrying out the same measure of the supplied power; however, considering that in most of countries of the world (between those Italy), an energy meter being able to talk with the different household appliances is not presently available, it has to be considered, even provisionally, the presence of the aforementioned external apparatus B2.

Considering block B2 relating to such an apparatus measuring the total absorbed power, we can distinguish the following parts:
- an ammeter A, for the measure of the current;
- a voltmeter V, for the measure of the voltage;
- a control logic LC, for the global management of the measuring apparatus ;
- a stabilized power supply AS, for the DC supply, at low voltage, of the different active parts of the system;
- an interface IN, for the information exchange by means of the powerline carrier communication system;
- a filter FA, possibly of active type, for the necessary suppression towards the external world, of the information associated to the powerline carrier communication system.

The control logic LC, based on the use of a microprocessor, performs two fundamental functions: the measure of the active power absorbed by the electric loads and the delivery of such information on the electric line, by means of powerline carrier communication system.

The measure of the absorbed active power is carried out by LC on the basis of the signals sent by the two measuring instruments A and V, and taking into account the value of the phase difference between voltage and current. The power is calculated by the circuit on the basis of the effective voltage values (from voltmeter V), of effective current (from ammeter A), and of the value of the phase difference, obtained by measuring the elapsed time between the instant in which the voltage is zero and that in which the current is zero. The transmission on the domestic "bus" of the measured value of the active power, being absorbed by the domestic loads, is carried out by LC through the interface IN of Fig. 3a.

The interface IN of Fig. 3a is a complex one, because it must be able to talk with the control unit LC and, in the meantime, must manage the communication on the powerline carrier communication "bus", ensuring the respect of the international standards on the electric safety, the electromagnetic compatibility and the information exchange.

The interface IN of block B1 is not herein described in detail, because this is not, as already said, the finality of the present invention; such interfaces can be, in any case, of any known type ö ; in the specific case, it is supposed that said interface is of a kind similar to interfaces IN (blocks 4, 7 and 10) of Fig. 1; as an example, such interface IN or IN1 may be realized through a bi-directional modem of the half-duplex kind, of the type ST 7537 by SGS Thomson, associated to a suitable microcontroller for the management of the information exchange protocol.

In Fig. 3b the blocks diagram is represented of an energy meter that is able to supply all the information being necessary for an advantageous embodiment of the present invention. Besides the blocks already described with reference to Fig. 3a, the following additional blocks are present:
- an interface IN1, in order to allow the remote reading by the firm that supplies the electric energy;
- a clock OC, for the management of the instant time and of different hourly fees;
- a selector LP for the limitation of the maximum power which can be supplied, on the basis of the supply contract agreed between the user and the supplier.

In this case, the main functions of the control unit LC of Fig. 3b, realized in a way in itself known, are the following:
- possibility of continuously measuring the supplied active power and counting the measures of the kWh of consumed energy (specific function of the electric energy meter);
- possibility of talking, upstreams, with the nearest energy distribution power plant, through the system of remote reading based on the powerline carrier communication system;
- possibility of management of fees differentiated in the several time periods, by virtue of the presence of a local clock, which can be eventually managed upstream through the powerline carrier communication system (function which is associated to the remote reading);
- possibility of locally configure the maximum power supplied on the basis of the supply contract agreed between the user and the supplier;
- possibility of talking, downstram, with the different domestic loads of the house, which are prearranged for receiving by an energy meter, within regular time intervals (for example any minute), the following information:
   a) measure of the total power supplied;
   b) maximum value of the power supplied according to the supply contract;
   c) value of the current time;
   d) fees associated to the different time periods.

The aforementioned information a), b), c) and d), supplied by an energy meter of the type described in Fig. 3b, allows, in a way in itself known, to household appliances equipped with a control system according to the present invention, to optimize the electric energy consumption, so avoiding to exceed the maximum power limits fixed by the supply contract, and favouring the use of the appliances during time periods in which the electric energy has a reduced cost.

In particular, the information a) and b) allow to manage, in a totally automatic way and according to the way expressed in the flow chart of Fig. 2, the istantaneous consumption of energy, so avoiding the action of the device (LP) that limits the maximum power which can be supplied according the supply contract.

The information c) and d) allow to the different household appliances equipped with the control system SC to automatically carry out their function in connection with time periods in which the cost of the energy is reduced. Such type of performance can be set by the user through the simple pressure of a button (energy-saving button associated to time periods with lower fees), without being necessary to indicate the start hour of the operation of the same household apparatus.

Another possibility is that of showing the operation start hour, by means of the rotation of a simple knob, the index of which can vary within an interval of 24 hours, without the complication of setting up a timer with a suitable delay (delay timer) calculated with respect to the current time; in that case, only the information c) is exploited, without the necessity of disposing locally, i.e. inside the household appliances, of a clock with the current time, being of difficult management for the user (e.g. the necessity of update after every black-out) and of considerable cost.

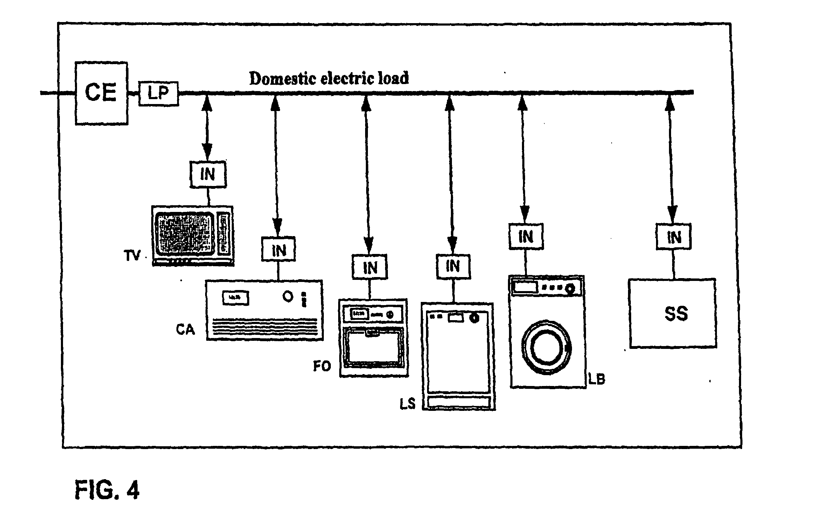

Fig. 4 finally represents in a schematic form the concept of "synergy" among different domestic loads, mainly used in order to avoid the exceeding of maximum rated power available for said loads. Such a concept is a direct consequence of the high management capacity of the control system, according to the present invention, of the household appliances equipped with the control system SC.

It is in fact possible that each household appliance, being able to optimize the consumptions and to reduce the costs using the information supplied by the energy meter, according to the present invention, is also able to take advantage of any eventual other useful information sent by other domestic electric loads onto the communication "bus". Such information can for example relate to measures associated to determined sensors being present in particular electric loads.

For example, the laundry washing machine LB, which is equipped with a sensor that measures the hardness of the water in the mains, can share the measured value on the "bus", with a benefit for other interested electric appliances, such as the dishwashing machine, the coffee machine, the electric water heater, the electric iron, etc ..

Another example may be carried out with reference to an air conditioner CA which, being equipped with air temperature and humidity sensors, can share on the "bus" the measure of these quantities, with a benefit for different interested household appliances, such as a refrigerator, a laundry washing machine, etc..

Other example can be made with reference to the home safety system, indicated with SS, that is equipped with sensors being able to detect gas leakages; also such information can be delivered on the "bus", in order to warn other eventual appliances about dangerous situations and allow the self switching-off of all those household appliances that can cause sparks.

A further example may be made with reference to some peculiar domestic electric appliances, that can send on the "bus" information being useful for the user, that can be shown on a television set TV: for example, the oven FO can communicate the end of a cooking process, the washing-machine LB the end of a washing process, a freezer the deadline for the maximum preservation period of a certain foodstuff, and so on.

From the above descriptions the characteristics and advantages of the present invention are clear. In particular, according to the present invention, it is possible to obtain the optimal management of the electric energy consumption in a domestic environment, without involving any complex programming action by the user.

The aim of such optimization is that of preventing the exceeding of the power limits established by the supply contract, so avoiding the possible black-out caused by the action of the power limiter (LP), and of favouring the use of the different household appliances during time periods in which the electric energy has a reduced cost. In particular it is evident that, being available domestic electric loads equipped with a control system (SC) having the previously described autonomy characteristics, it is possible to rationalize the consumption of the electric energy in a fully automatic way, without having to employ complex and expensive centralized control apparatuses.

The sole condition for performing said rationalization of the energy consumption, according to proposed method, is the presence of a device that measures the absorbed power, that is able to communicate with the control system of each single "intelligent" domestic loads.

The domestic loads that are made "intelligent", according to the present invention, can adapt its own operative cycles in function of the available current and, therefore, also according to eventual "not intelligent" electric appliances, to which a maximum priority is assigned; eventually, according to invention, the household appliances produced according to the present invention, can also be used to manage in a fully autonomous way the hour, so making unnecessary an on-board clock.

Advantages are finally also evident, in terms of cost for the user, if compared to the known solutions (mainly in consideration of the fact that most of the household appliances actually produced already comprise a microcontroller, the capability of which is not usually fully exploited).

Another aspect of the invention that has to be underlined is the concept of "synergy" between the different domestic loads equipped with the control system SC, based on the possibility of sharing the information associated to different sensors, being available on the communication "bus" of the domestic environment.

It is clear that numerous variations are possible for those skilled in the art to the method described as an example, without departing the scope of the inventive idea as defined in the appended claims. For example, the use of the above mentioned powerline carrier communication system has been shown as a pure example, because of its practical convenience, due to the fact that it does not require the installation of any communication line and is thus compatible with the electric network of any domestic environment; it is however clear that other means can be utilized for the exchange of information being necessary for the present invention, for example a simple cable with two wires, similar to the telephonic pair (that would be the more economic solution), a coaxial cable, a system with radio waves, a infrared radiation system etc.

## Claims

1. Method for the management of the energy consumption in a domestic environment, in which a plurality of electric loads is installed, among which household appliances (LB,LS,FO), that provides for equipping said electric loads with an electronic control system (SC),
**characterized by** the steps of
- providing each electric load with a control system (SC)
- making available an information relating to the instantaneous total consumption of the electric energy (PT) in the domestic environment to said control systems (SC), through a suitable communication bus, by a measuring device (B2) being external to the household appliances (LB,LS,FO);
- letting the control systems (SC) receive said information relating to the total instantaneous consumption of the electric energy (PT), supplied by said measuring device (B2) on said communication bus;
- managing of the electric energy consumption in an automatic way by the ensemble control systems (SC) of each of said electric appliances (LB,LS,FO), by
suitably programming the control systems (SC) for using for said step of managing said information relating to the instantaneous total consumption of the electric energy (PT) in the domestic environment,
letting said control systems (SC) of said household appliances (LB,LS,FO) for dynamically self-adjusting their own energy consumption,
adapting them continuously to the global energetic exigencies of the domestic environment and
adapting the operative cycles of the related household appliances (LB,LS,FO) in function of the information relating to the instantaneous total consumption of the electric energy (PT).

2. Method, according to claim 1, **characterized by** adapting the operative cycles of the related household appliances (LB,LS,FO) in function of the power being available at the moment (Pmax-PT).

3. Method, according to claim 2, **characterized by** letting said control systems (SC) use said information relating to the total instantaneous consumption of the electric energy (PT) in function of the value of the maximum power (Pmax) made available by the supplier of the electric energy on the basis of the supply contract agreed with the user.

4. Method, according to claim 3, **characterized by** sending said available maximum power value (Pmax) being in particular delivered to the control system (SC) of each household appliance through hardware configuration means at the time of the installation of the household appliance.

5. Method, according to claim 1, **characterized by** letting said control systems (SC) receive, within regular time intervals, the information relating to the total instantaneous consumption of the electric energy (PT), supplied by said measuring device (B2) on said communication bus.

6. Method, according to claim 1, **characterized by** providing priority rules among the different household appliances, in order to ensure a dynamic distribution of the energy in function of the type of household appliances (LB,LS,FO) that are active and in function of the importance of the role that said household appliances play for the user.

7. Method, according to claim 6, **characterized by** declaring bus by the control system (SC) of each household appliance (LB,LS,FO) onto said transmission bus its own electric energy instantaneous consumption and/or an information that allows the other loads to know that said household appliance (LB,LS,FO) is operating, said information communicated on the bus representing in particular the priority level assigned to said household appliance.

8. Method, according to at least one of the previous claims, **characterized by** providing reciprocal information exchange between said control systems (SC) and said measuring device (B2), said reciprocal information exchange being in particular realized through a powerline carrier communication system, utilizing as transmitting medium the domestic electric net.

9. Method, according to claim 8, **characterized in that** said reciprocal information exchange is managed by means of suitable established rules, such as for example the communication protocol EHS also called European Home System or the communication protocol LON also called Local Operating Network.

10. Method, according to claim 1, **characterized in that** the control system (SC) of each household appliance (LB,LS,FO) provides for reducing and/or leading to the normality status the energy consumption required by the particular phase of the operative cycle in which the household appliance is found to operate, when the maximum available power is nearly exceeded.

11. Method, according to the previous claim, **characterized in that** the control system (SC) of each household appliance (LB,LS,FO) cyclically verifies whether the total instantaneous consumption of the electric energy (PT) is greater than the available maximum power (Pmax) established by the supply contract, where, in particular, if the total instantaneous consumption of electric energy (PT) is greater than the available maximum power (Pmax), the control system (SC) provides for reducing the energy consumption of the related household appliance of a quantity being greater or equal to the difference between the value of the total instantaneous consumption of the electric energy (PT) and that of the available maximum power (Pmax).

12. Method, according to claim 11 **characterized in that**, if the value of the available maximum power (Pmax) is greater than the value of the total instantaneous consumption of the electric energy (PT), the control system (SC) verifies the power absorption state of the relative household appliance and, if the household appliance has previously reduced its own energy consumption, the control system (SC) provides for increasing the related energy consumption, the increase of the power to the household appliance being however not greater than the difference between the value of the total instantaneous consumption of the electric energy (PT) and that of the available maximum power (Pmax).

13. Method, according to claim 1, **characterized in that** said measuring device (B2) makes available onto said communication bus the information of current time, in order that said control systems (SC) provide to manage in a fully autonomous way the current time, without the necessity of locally disposing, i.e. inside of each household appliance, of a clock.

14. Method, according to claim 1, **characterized in that** the control system (SC) of each household appliance (LB,LS,FO) is able to use the data declared onto said communication bus by other household appliances (LB,LS,FO), said data relating to measures associated to determined sensors being present in peculiar household appliances.

15. System for the management of the energy consumption in a domestic environment comprising
a plurality of electric loads, among which household appliances (LB,LS,FO), having an electronic control system (SC), for the interfacing (IN) with a communication bus,
a measuring device (B2) external to the household appliances (LB,LS,FO) suitable for measuring and making available an information relating to the instantaneous total consumption of the electric energy (PT) in the domestic environment to said control systems (SC), through said communication bus,
the control systems (SC) being fit and programmed to receive said information relating to the total instantaneous consumption of the electric energy (PT), supplied by said measuring device (B2) on said communication bus and manage the energy consumption according to the method according to claim 1 and following claims.

16. Household appliance connected to an electric supply network (RE) **characterized by** the combination of:
an electronic interface (IN) connected to said electric network (RE) and able to allow, through the use of a suitable transmission system, e.g. a powerline carrier communication system, an information exchange among said appliance (LB) and other appliances (LS,FO,B2) that are also connected to the network (RE);
an electronic control unit (SC1, SC2,SC3) connected to said interface (IN) and able to regulate the energy drawing from the household appliance by said network (RE) in function of information (PT, PTmax, time) received through the said interface (IN), as well as send, through the same interface (IN) information to at least another appliance (LS,FO,B2) connected to said network **characterized in that** said information (PT, PTmax, time) received through the said interface (IN) comprises the information relating to the instantaneous total consumption of the electric energy (PT) made available, through a suitable communication bus, by a measuring device (B2) being external to the household appliances (LB,LS,FO).

## Patentansprüche

1. Verfahren für die Regulierung des Energieverbrauches in einer Haushaltsumgebung, in der eine Reihe an elektrischen Lasten installiert ist, unter denen sich Haushaltsgeräte (LB, LS, FO) befinden, wobei in dem Verfahren vorgesehen ist, dass die elektrischen Lasten mit einem elektronischen Steuersystem (SC) versehen sind,
**gekennzeichnet durch** die folgenden Schritte:
- Versehen jeder elektrischen Last mit einem Steuersystem (SC),
- Bereitstellen der Information betreffend den augenblicklichen Gesamtverbrauch an elektrischer Energie (PT) in der Haushaltsumgebung für die Steuersysteme (SC) über einen geeigneten Kommunikationsbus **durch** eine Messeinrichtung (B2), welche außerhalb der Haushaltsgeräte (LB, LS, FO) vorgesehen ist;
- Empfangen der Information betreffend den augenblicklichen Gesamtverbrauch an elektrischer Energie (PT), die **durch** die Messeinrichtung (B2) über den Kommunikationsbus bereitgestellt wird, **durch** die Steuersysteme (SC);
- Regulieren des elektrischen Energieverbrauches auf automatische Weise **durch** die alle Steuersysteme (SC) der gesamten elektrischen Geräte (LB, LS, FO) mittels geeigneter Programmierung der Steuersysteme (SC), um die Information betreffend den augenblicklichen Gesamtverbrauch an elektrischer Energie (PT) in der Haushaltsumgebung für den Schritt des Regulierens zu verwenden,
Ermöglichen, dass die Steuersysteme (SC) der Haushaltsgeräte (LB, LS, FO) ihren eigenen Energieverbrauch dynamisch selbst einstellen,
kontinuierliches Anpassen der Steuersysteme an die Gesamtenergieanforderungen der Haushaltsumgebung, und
Anpassen der Betriebszyklen der betreffenden Haushaltsgeräte (LB, LS, FO) in Abhängigkeit der Information betreffend den augenblicklichen Gesamtverbrauch an elektrischer Energie (PT).

2. Verfahren nach Anspruch 1, **gekennzeichnet durch** Anpassen der Betriebszyklen der betroffenen Haushaltsgeräte (LB, LS, FO) in Abhängigkeit der Energie, die in diesem Augenblick verfügbar ist (Pmax-PT).

3. Verfahren nach Anspruch 2, **dadurch gekennzeichnet, dass** die Steuersysteme (SC) die Information betreffend den augenblicklichen Gesamtverbrauch an elektrischer Energie (PT) in Abhängigkeit des Wertes der maximalen Energie (Pmax), der durch den Versorger für die elektrische Energie auf Basis des Versorgungsvertrages, der mit dem Abnehmer vereinbart worden ist, zur Verfügung gestellt wird, nutzen.

4. Verfahren nach Anspruch 3, **gekennzeichnet durch** Übermitteln des verfügbaren maximalen Energiewertes (Pmax), welcher insbesondere dem Steuersystem (SC) jedes Haushaltsgerätes bereitgestellt wird, **durch** Hardwarekonfigurationsmittel zum Zeitpunkt der Installation des Haushaltsgerätes.

5. Verfahren nach Anspruch 1, **dadurch gekennzeichnet, dass** die Steuersysteme (SC) innerhalb regelmäßiger Zeitintervalle die Information betreffend den augenblicklichen Gesamtverbrauch an elektrischer Energie (PT), die durch die Messeinrichtung (B2) auf dem Kommunikationsbus zugeführt wird, empfangen.

6. Verfahren nach Anspruch 1, **dadurch gekennzeichnet, dass** Prioritätsregeln für die unterschiedlichen Haushaltsgeräte bereitgestellt werden, um eine dynamische Verteilung der Energie in Abhängigkeit der Art der Haushaltsgeräte (LB, LS, FO), die sich im Betrieb befinden, und in Abhängigkeit der Wichtigkeit der Rolle, die diese Haushaltsgeräte für den Benutzer spielen, sicherzustellen.

7. Verfahren nach Anspruch 6, **gekennzeichnet durch** Meldung an den Bus mittels des Steuersystems (SC) jedes Haushaltsgerätes (LB, LS, FO) auf dem Übertragungsbus seines eigenen augenblicklichen elektrischen Energieverbrauches und/oder einer Information, die den anderen Lasten ermöglicht, zu wissen, dass das betreffende Haushaltsgerät (LB, LS, FO) arbeitet, wobei die Information, die über den Bus übertragen wird, insbesondere die Prioritätsstufe, welche diesem Haushaltsgerät zugeordnet ist, wiedergibt.

8. Verfahren nach zumindest einem der vorstehenden Ansprüche, **gekennzeichnet durch** Bereitstellen eines reziproken Informationsaustausches zwischen den Steuersystemen (SC) und der Messeinrichtung (B2), wobei der reziproke Informationsaustausch insbesondere über ein Datenträger-Übertragungssystem realisiert wird, wobei als Übertragungsmedium das elektrische Haushaltsnetz verwendet wird.

9. Verfahren nach Anspruch 8, **dadurch gekennzeichnet, dass** der reziproke Informationsaustausch nach geeigneten Regeln, wie beispielsweise dem Kommunikationsprotokoll EHS (European Home System), welches auch als europäisches Haussystem bezeichnet wird, oder dem Kommunikationsprotokoll LON (Local Operting System), welches auch als lokales Betriebsnetzwerk bezeichnet wird, erfolgt.

10. Verfahren nach Anspruch 1, **dadurch gekennzeichnet, dass** das Steuersystem (SC) jedes Haushaltsgerätes (LB, LS, FO) eine Verringerung und/oder Rückführung zu dem normalen Status des Energieverbrauches, welcher durch die besondere Phase des Betriebszyklus erforderlich ist, bei dem das Haushaltsgerät gerade arbeitet, herbeiführt, wenn die maximal verfügbare Energie nahezu überschritten ist.

11. Verfahren nach dem vorstehenden Anspruch, **dadurch gekennzeichnet, dass** das Steuersystem (SC) jedes Haushaltsgerätes (LB, LS, FO) zyklisch überprüft, ob der augenblickliche Gesamtverbrauch an elektrischer Energie (PT) größer ist als die verfügbare Maximalenergie (Pmax), die durch den Versorgungsvertrag festgelegt ist, wobei insbesondere, wenn der augenblickliche Gesamtverbrauch an elektrischer Energie (PT) größer ist als die verfügbare Maximalenergie (Pmax), das Steuersystem (SC) die Verringerung des Energieverbrauches des betreffenden Haushaltsgerätes auf eine Menge bewirkt, die größer als der oder gleich dem Unterschied zwischen dem Wert des augenblicklichen Gesamtverbrauches an elektrischer Energie (PT) und dem Wert der verfügbaren Maximalenergie (Pmax) ist.

12. Verfahren nach Anspruch 11, **dadurch gekennzeichnet, dass**, wenn der Wert der verfügbaren Maximalenergie (Pmax) größer ist als der Wert des augenblicklichen Gesamtverbrauchs an elektrischer Energie (PT) das Steuersystem (SC) den Energieaufnahmezustand des betreffenden Haushaltsgerätes überprüft und, wenn das Haushaltsgerät vorher seinen eigenen Energieverbrauch verringert hat, das Kontrollsystem (SC) die Zunahme des betreffenden Energieverbrauches vomimmt, wobei die Zunahme der Energie für das Haushaltsgerät jedoch nicht größer ist als der Unterschied zwischen dem Wert des augenblicklichen Gesamtverbrauches an elektrischer Energie (PT) und dem Wert der verfügbaren Maximalenergie (Pmax).

13. Verfahren nach Anspruch 1, **dadurch gekennzeichnet, dass** die Messeinrichtung (B2) auf dem Kommunikationsbus die Information der aktuellen Uhrzeit verfügbar macht, damit die Steuersysteme (SC) in der Lage sind, vollständig autonom die augenblickliche Zeit ohne die Notwendigkeit der lokalen Anordnung einer Uhr, d.h. innerhalb jedes Haushaltsgerätes, zu verwalten.

14. Verfahren nach Anspruch 1, **dadurch gekennzeichnet, dass** das Steuersystem (SC) jedes Haushaltsgerätes (LB, LS, FO) in der Lage ist, die Daten, die an den Kommunikationsbus durch die anderen Haushaltsgeräte (LB, LS, FO) gemeldet wurden, zu nutzen, wobei die Daten Messungen, die bestimmten Sensoren zugeordnet sind, welche in bestimmten Haushaltsgeräten vorhanden sind, betreffen.

15. System zum Regulieren des Energieverbrauches in einer Haushaltsumgebung, enthaltend:
eine Reihe an elektrischen Lasten, unter denen sich Haushaltsgeräte (LB, LS, FO) mit einem elektronischen Steuersystem (SC), das über ein Interface (IN) mit einem Kommunikationsbus verbunden ist, befinden,
eine Messeinrichtung (B2), die außerhalb der Haushaltsgeräte (LB, LS, FO) angeordnet ist und die zur Messung sowie Bereitstellung einer Information betreffend den augenblicklichen Gesamtverbrauch an elektrischer Energie (PT) in der Haushaltsumgebung an die Steuersysteme (SC) über den Kommunikationsbus in der Lage ist,
wobei die Steuersysteme geeignet und programmiert sind, um die Information betreffend den augenblicklichen Gesamtverbrauch an elektrischer Energie (PT), welche durch die Messeinrichtung (B2) an den Kommunikationsbus gemeldet wird, zu empfangen und den Energieverbrauch gemäß dem Verfahren nach Anspruch 1 und den anschließenden Ansprüchen zu regeln.

16. Haushaltsgerät, welches mit einem elektrischen Versorgungsnetzwerk (RE) verbunden ist, **gekennzeichnet durch** die folgendende Kombination:
ein elektronisches Interface (IN), welches mit dem elektrischen Netzwerk (RE) verbunden ist und welches in der Lage ist, einen Informationsaustausch zwischen dem Gerät (LB) und den anderen Geräten (LS, FO, B2), die ebenfalls mit dem Netzwerk (RE) verbunden sind, unter Verwendung eines geeigneten Übertragungssystems, beispielsweise eines Datenträger-Übertragungssystems, zu ermöglichen;
eine elektronische Steuereinheit (SC1, SC2, SC3), die mit dem Interface (IN) verbunden ist und die in der Lage ist, die Energie, welche von dem Haushaltsgerät über das Netzwerk (RE) gezogen wird, in Abhängigkeit der Information (PT, PTmax, Zeit), die **durch** das Interface (IN) empfangen wurde, zu regulieren und über das gleiche Interface (IN) Informationen an zumindest ein weiteres Gerät (LS, FO, B2), das mit dem Netzwerk verbunden ist, zu übermitteln, **dadurch** gekennzeichnet, dass die Information (PT, PTmax, Zeit), die über das Interface (IN) empfangen wird, die Information enthält, welche den augenblicklichen Gesamtverbrauch an elektrischer Energie (PT) betrifft und welche über einen geeigneten Kommunikationsbus **durch** eine Messeinrichtung (B2) verfügbar gemacht wurde, die außerhalb der Haushaltsgeräte (LB, LS, FO) angeordnet ist.

## Revendications

1. Procédé pour la gestion de la consommation d'énergie dans un environnement domestique, dans lequel est installée une pluralité de charges électriques, parmi lesquelles des appareils électroménagers (LB, LS, FO), qui prévoit l'équipement desdites charges électriques d'un système de contrôle électronique (SC)
**caractérisé par** les étapes consistant à
doter chaque charge électrique d'un système de contrôle (SC) ;
rendre une information relative à la consommation totale instantanée de l'énergie électrique (PT) dans l'environnement domestique disponible pour ledit système de contrôle (SC) via un bus de communication approprié, au moyen d'un appareil de mesure (B2) qui est externe aux appareils électroménagers (LB, LS, FO) ;
laisser le système de contrôle (SC) recevoir ladite information relative à la consommation totale instantanée de l'énergie électrique (PT), fournie par ledit appareil de mesure (B2) sur ledit bus de communication ;
gérer la consommation d'énergie électrique de façon automatique par l'ensemble des systèmes de contrôle (SC) de chacun desdits appareils électroménagers (LB, LS, FO),
en programmant de façon appropriée les systèmes de contrôle (SC) pour qu'ils utilisent, pour ladite étape de gestion, ladite information relative à la consommation totale instantanée de l'énergie électrique (PT) dans l'environnement domestique ;
en laissant lesdits systèmes de contrôle (SC) desdits appareils électroménagers (LB, LS, FO) régler eux-mêmes dynamiquement leur propre consommation d'énergie ;
en les adaptant continuellement aux exigences énergétiques globales de l'environnement domestique et
en adaptant les cycles de fonctionnement des appareils électroménagers concernés (LB, LS, FO) en fonction de l'information relative à la consommation totale instantanée de l'énergie électrique (PT).

2. Procédé selon la revendication 1, **caractérisé par** l'adaptation des cycles de fonctionnement des appareils électroménagers concernés (LB, LS, FO) en fonction de la puissance disponible à ce moment-là (Pmax-PT).

3. Procédé selon la revendication 2, **caractérisé en ce qu'**on laisse lesdits systèmes de contrôle (SC) utiliser ladite information relative à la consommation totale instantanée de l'énergie électrique (PT) en fonction de la valeur de puissance maximale (Pmax) rendue disponible par le fournisseur de l'énergie électrique sur la base du contrat d'approvisionnement convenu avec l'utilisateur.

4. Procédé selon la revendication 3, **caractérisé par** l'envoi de ladite valeur de puissance maximale disponible (Pmax) qui est fournie en particulier audit système de contrôle (SC) de chaque appareil électroménager, par l'intermédiaire de moyens de configuration de matériel au moment de l'installation de l'appareil électroménager.

5. Procédé selon la revendication 1, **caractérisé en ce qu'**on laisse lesdits systèmes de contrôle (SC) recevoir, à intervalles réguliers, l'information relative à la consommation totale instantanée de l'énergie électrique (PT) fournie par ledit appareil de mesure (B2) sur ledit bus de communication.

6. Procédé selon la revendication 1, **caractérisé par** la fourniture de règles de priorité parmi les différents appareils électroménagers, afin d'assurer une distribution dynamique de l'énergie en fonction du type d'appareils électroménagers (LB, LS, FO) qui sont actifs et en fonction de l'importance du rôle que lesdits appareils électroménagers jouent pour l'utilisateur.

7. Procédé selon la revendication 6, **caractérisé par** la déclaration d'un bus par le système de contrôle (SC) de chaque appareil électroménager (LB, LS, FO) sur ledit bus de transmission de sa propre consommation instantanée d'énergie électrique et/ou une information qui permet aux autres charges de savoir que ledit appareil électroménager (LB, LS, FO) est en fonctionnement, ladite information communiquée sur le bus représentant en particulier le niveau de priorité attribué audit appareil électroménager.

8. Procédé selon l'une au moins des revendications précédentes,
**caractérisé par** la fourniture d'un échange réciproque d'informations entre lesdits systèmes de contrôle (SC) et ledit appareil de mesure (B2), ledit échange réciproque d'informations étant en particulier réalisé via un système de transmission pour le transport de données, en utilisant comme milieu de transmission le réseau électrique domestique.

9. Procédé selon la revendication 8, **caractérisé en ce que** ledit échange réciproque d'informations est géré au moyen de règles établies appropriées, telles que par exemple le protocole de communication EHS, également appelé *European* *Home System*, ou le protocole de communication LON, également appelé *Local Operating Network*.

10. Procédé selon la revendication 1, **caractérisé en ce que** le système de contrôle (SC) de chaque appareil électroménager (LB, LS, FO) prévoit la réduction et/ou la mise à l'état de normalité de la consommation d'énergie requise par la phase particulière du cycle de fonctionnement dans lequel il est constaté que l'appareil électroménager fonctionne, lorsque la puissance maximale disponible est presque dépassée.

11. Procédé selon la revendication précédente, **caractérisé en ce que** le système de contrôle (SC) de chaque appareil électroménager (LB, LS, FO) vérifie cycliquement si la consommation totale instantanée de l'énergie électrique (PT) est supérieure à la puissance maximale disponible (Pmax) établie par le contrat d'approvisionnement, où, en particulier, si la consommation totale instantanée de l'énergie électrique (PT) est supérieure à la puissance maximale disponible (Pmax), le système de contrôle (SC) prévoit la réduction de la consommation d'énergie de l'appareil électroménager concerné d'une quantité qui est supérieure ou égale à la différence entre la valeur de la consommation totale instantanée de l'énergie électrique (PT) et celle de la puissance maximale disponible (Pmax).

12. Procédé selon la revendication 11, **caractérisé en ce que**, si la valeur de la puissance maximale disponible (Pmax) est supérieure à la valeur de la consommation totale instantanée de l'énergie électrique (PT), le système de contrôle (SC) vérifie l'état d'absorption de puissance de l'appareil électroménager concerné, et, si l'appareil électroménager a précédemment réduit sa propre consommation d'énergie, le système de contrôle (SC) prévoit une augmentation de la consommation d'énergie relative, l'augmentation de la puissance de l'appareil électroménager n'étant cependant pas supérieure à la différence entre la valeur de la consommation totale instantanée de l'énergie électrique (PT) et celle de la puissance maximale disponible (Pmax).

13. Procédé selon la revendication 1, **caractérisé en ce que** ledit appareil de mesure (B2) rend disponible sur ledit bus de communication les informations concernant l'heure courante, afin que ledit système de contrôle (SC) se charge de gérer d'une manière totalement autonome l'heure courante, sans la nécessité de disposer localement d'une horloge, c'est-à-dire à l'intérieur de chaque appareil électroménager.

14. Procédé selon la revendication 1, **caractérisé en ce que** le système de contrôle (SC) de chaque appareil électroménager (LB, LS, FO) est capable d'utiliser les données déclarées sur ledit bus de communication par d'autres appareils électroménagers (LB, LS, FO), lesdites données relatives aux mesures liées à des capteurs déterminées étant présentes sur un appareil électroménager spécial.

15. Système pour la gestion de la consommation d'énergie dans un environnement domestique comprenant
une pluralité de charges électriques, parmi lesquelles des appareils électroménagers (LB, LS, FO) ayant un système de contrôle électronique (SC) pour l'interfaçage (IN) avec un bus de communication, un appareil de mesure (B2) externe aux appareils électroménagers (LB, LS, FO) approprié pour mesurer et rendre disponible une information relative à la consommation totale instantanée de l'énergie électrique (PT) dans l'environnement domestique pour lesdits systèmes de contrôle (SC), par l'intermédiaire dudit bus de communication,
les systèmes de contrôle (SC) étant adaptés et programmés pour recevoir ladite information relative à la consommation totale instantanée de l'énergie électrique (PT), fournie par ledit appareil de mesure (B2) sur ledit bus de communication et gérer la consommation d'énergie conformément au procédé selon la revendication 1 et les revendications suivantes.

16. Appareil électroménager connecté à un réseau d'approvisionnement électrique (RE), **caractérisé par** la combinaison :
d'une interface électronique (IN) connectée audit réseau électrique (RE) et capable de permettre, grâce à l'utilisation d'un système de transmission approprié, par exemple, un système de transmission pour le transport de données, un échange d'informations entre lesdits appareils (LB) et d'autres appareils (LS, FO, B2) qui sont aussi connectés au réseau (RE) ;
d'une unité de contrôle électronique (SC1, SC2, SC3) connectée à ladite interface (IN) et capable de réguler l'énergie prélevée par l'appareil électroménager sur ledit réseau (RE) en fonction des informations (PT, PTmax, heure) reçues via ladite interface (IN), ainsi que d'envoyer, via la même interface (IN), les informations à au moins un autre appareil (LS, FO, E2) connecté audit réseau,
**caractérisé en ce que** lesdites informations (PT, PTmax, heure) reçues via ladite interface (IN) comprennent l'information relative à la consommation totale instantanée de l'énergie électrique (PT) rendue disponible, via un bus de communication approprié, par un appareil de mesure (B2) qui est externe aux appareils électroménagers (LB, LS, FO).
